# EUROPEAN PATENT SPECIFICATION

(11) **EP 3 426 428 B1**
(45) Date of publication and mention of the grant of the patent: **18.06.2025**
(21) Application number: 17711254.7
(22) Date of filing: 08.03.2017
(51) Int. Cl.: B23K 26/03, B23K 26/38, B23K 31/12

(54) **APPARATUS AND METHOD FOR CONTROLLING LASER PROCESSING OF A MATERIAL**
VORRICHTUNG UND VERFAHREN ZUR KONTROLLE DER LASERVERARBEITUNG EINES MATERIALS
APPAREIL ET PROCÉDÉ DE COMMANDE DE TRAITEMENT LASER D'UN MATÉRIAU

(30) Priority: 09.03.2016 GB 201604097
(43) Date of publication of application: 16.01.2019
(73) Proprietor: Trumpf Laser UK Limited, Southampton SO30 2QU (GB)
(72) Inventor: KEEN, Stephen John, Leamington Spa Warwickshire CV33 9SH (GB)
(74) Representative: Dolleymores
(86) International application number: PCT/GB2017/000031
(87) International publication number: WO 2017/153707

(56) References cited:
- EP-A1- 2 699 380
- US-A- 5 045 669
- US-A- 5 286 947
- US-A1- 2004 069 754
- US-A1- 2012 188 365

## Description

### Field of Invention

This invention relates to an apparatus and a method for controlling laser processing of a material. More especially, this invention relates to an apparatus and a method for controlling laser processing of a material by obtaining an indication of the piercing of the material by detecting and analysing optical radiation emitted from the material while it is being pierced by the laser.

### Background to the Invention

High power lasers have important applications in the laser processing of industrial materials. Pulsed lasers, with peak powers exceeding 10kW, are used in marking, engraving, cutting, welding, and drilling applications. Continuous wave lasers with powers exceeding 500W are used in cutting and welding applications. These high power lasers advantageously have optical fibre beam delivery systems for delivering the laser radiation from the laser to a work piece, which work piece can be located tens or hundreds of metres from the laser.

Laser cutting of materials typically commences with piercing through the material in order to form at least one hole. There can be many holes required and so the piercing can contribute a significant amount of time to the cutting process. The ability to know accurately when the material is pierced allows the apparatus to start the cut or move on to another pierce, hence improving reliability and productivity as dwell times for piercing are kept to a minimum.

There are many industrial lasers that use a beam delivery cable between the laser and the work piece. These lasers include fibre lasers, disk lasers, and rod lasers. Fibre lasers are especially attractive owing to their excellent reliability, cost, and wall plug efficiency. Also, the fibre lasers provide power levels with good beam quality to multi kilowatts. The beam delivery cable contains optical fibre, which can be tens or even hundreds of metres long, allowing the laser to be located in a location remote from the work piece. There is thus a continuous optical path through the optical fibre from the laser to the work piece through which optical radiation emitted from the work piece can propagate back to the laser itself. Backward travelling optical radiation is generally considered a nuisance and needs to be removed in a controlled manner to prevent damage to the laser.

It is an aim of this invention to analyze the optical radiation emitted from the work piece in order to control the laser processing of a material.

US 5045669A, EP 2699380A1, US 2004/069754A1, US 5286947A and

US2012 /188365 disclose apparatus for controlling laser processing of a material.

### The Invention

According to a non-limiting embodiment of the present invention there is provided apparatus for controlling laser processing of a material, as claimed in claim 1.

The apparatus of the invention is advantageous in that significant time is often devoted to piercing material. Detecting and analyzing the optical radiation that is emitted by the material enables the apparatus to commence another piercing or a cutting operation more quickly after piercing the material. The optical radiation emitted from the material may be laser radiation that is reflected from the material together with optical radiation that is emitted by the material as a consequence of it being heated by the laser radiation.

The apparatus may be one wherein the means for directing the laser radiation onto the material includes an optical fibre and a laser processing head, and wherein the optical fibre is configured to propagate the laser radiation from the laser to the laser processing head. Use of the optical fibre enables the laser to be located tens or hundreds of metres from the material being processed. This can reduce constraints on factory layouts, for example in the provisioning of services such as cooling and electrical power for the laser.

The apparatus may include a coupler configured to couple the optical radiation from the optical fibre to the detector. Guiding the optical radiation from the material along the optical fibre towards the laser, and coupling the optical radiation from the optical fibre to the detector helps to prevent damage to the laser caused by the backward travelling optical radiation. In addition, it enables the detector, the electronic filter, and the discriminator to be located within or near to the laser. This has the advantage for the end user that no equipment for detecting laser piercing is needed around the machining area, saving on cost and complexity. This is particularly advantageous for machining installations where it is difficult or impractical to include sensors at the material for detecting laser piercing.

The detector may be located in or on the laser processing head. This can be advantageous if other sensors are used for process control as signals from the detector and these other sensors can be combined together.

The electronic filter may comprise a peak detector. Peak detectors can be designed simply and reliably using analogue or digital electronics. The peak detector can, for example, output the maximum value, or maximum minus the minimum value of the electronic signal over pre-determined time intervals. Such maximum or maximum minus minimum values can then be low pass filtered and level detected by the discriminator.

The electronic filter may comprise a root mean square filter. Root mean square filters can provide a better signal to noise ratio than peak detection if there is interference in the signal, caused for example by electrical interference from machinery.

The electronic filter may comprise a bandpass filter. A bandpass filter can be used to analyze particular frequency components present in the electronic signal that are indicative of certain dynamics of the laser processing of the material. Such analysis can provide better process control and improve quality.

The electronic filter may comprise a high pass filter. High pass filters are useful for removing the direct current component of an electronic signal.

The electronic filter may comprise an integrator. The electronic signal is typically very noisy while piercing the material, and the noise reduces after the material has been pierced. Integrating the electronic signal, preferably after high pass or band pass filtering, can provide a signature that enables the laser processing to be better understood.

The electronic filter may comprise a band stop filter configured to reject interference. This can be advantageous in factory environments where signal interference and pick up can interfere with signal processing.

The discriminator may include a level detector for detecting a predetermined amplitude. The predetermined amplitude may be selected to correspond to the material being pierced.

The discriminator may include a slope detector for detecting a predetermined slope. The slope detector is useful for analyzing an electronic signal that has been integrated. Once the material has been pierced, the slope of the integrated electronic signal typically reduces.

The electronic filter and the discriminator may be configured in a digital electronic circuit. Digital electronic implementation enables a wide variety of filter and discriminator settings to be implemented, each optimized for different materials and material thicknesses.

The electronic filter may utilize spectral frequency analysis. Spectral frequency analysis can be provided using fast Fourier transforms. It can be used to select particular frequency components present in the electrical signal that correspond to dynamics of laser piercing, cutting, or welding processes.

The electronic filter and the discriminator may be implemented with fuzzy logic. Fuzzy logic is useful for analyzing complex waveforms and processes.

At least one of the electronic filter and the discriminator may comprise a neural network. Neural networks can provide self learning functions that can be used to optimize the laser piercing process. Use of neural networks can avoid having to consult laser experts when materials are changed, or if the thickness or surface finish of a material is altered. The neural network can train the apparatus to adjust the filter and discriminator parameters.

The electronic filter may comprise an analogue electronic filter. Although digital electronic implementation offers many advantages, analogue electronics are simple to implement and may be a lower cost option if the apparatus is only used to machine a single component.

The apparatus may comprise an optical filter. This can be advantageous in order to monitor and control other parameters associated with laser cutting, such as the temperature of the material while piercing and while cutting the material. The higher the temperature of the material, the more wavelengths in the optical spectrum that are emitted by the material. More than one optical filter can be provided each connected to a different detector. The filter detector combinations can be configured to analyse the optical spectral content at different wavelengths.

Melting or vaporization of the material during the piercing process is believed to cause fluctuations in the power and direction of the optical radiation emitted by the material, which can be observed as noise in the electronic signal.

The characteristic feature may provide an indication that the material has been pierced. Alternatively or additionally, the characteristic feature may provide an indication as to when the optics requires cleaning or replacing in part. The characteristic feature that provides an indication as to when the optics requires cleaning or replacing in whole or in part may be different from the characteristic feature that provides an indication that the material has been pierced. Surprisingly the inventor has observed an increase in the amplitude of the electronic signal after the material has been pierced. This increase is associated with optics that require cleaning or replacing in whole or in part. The increase can be removed by replacing contaminated or defect cover slides that protect the lens from spatter from the work piece.

The material may comprise a test piece. This aspect of the invention is particularly useful in cutting machines. A test piece such as a 0.1mm to 2mm thick sheet of copper can be provided to one side of a cutting bed and the test piece can be pierced periodically for quality control purposes. Thus if the optics becomes dirty through spatter ejected from the material in a work piece such as steel or other materials, the state of the optics can be detected and the optics cleaned or cover slides replaced. Other features of the invention, such as pierce detection, can be utilized to control the piercing of the work piece.

As an example, copper has a thermal conductivity of approximately 400 W/m/K which causes heat absorbed by the material during piercing to be conducted away from the hole more rapidly than with material such as iron that has a thermal conductivity of approximately 83W/m/K. Consequently the hole formed in the piercing process has a similar diameter to the spot size of the laser radiation on the surface of the material. Contaminated or dirty optics can cause scatter or thermal lensing, which causes interaction of the laser radiation with the copper after piercing, and which can cause additional reflection or emission of the laser radiation from the surface. Thus monitoring the amplitude of the electronic signal or the rate of change in amplitude of the electronic signal after the material or a test piece has been pierced provides a useful and valuable indication that the optics needs cleaning or replacing in whole or in part.

The material may have a thermal conductivity greater than 150 W/m/K, preferably greater than 200 W/m/K and more preferably greater than 300 W/m/K. The material may comprise copper.

The apparatus may be for controlling the laser piercing of the material. Alternative or additional control purposes include controlling the cutting speed of materials in order to optimize the quality of the cut. If the cutting speed is too fast, then this can lead to poor edge quality of the cut. If the cutting speed is too slow, then this can lead to excessive dross on the underside of the cut. The optimal cutting speed can also vary across a material, particularly at the edges of a sheet of metal owing to a change in the local heat sinking provided by the remainder of the sheet. Being able to control the cutting speed by monitoring and analyzing the optical radiation emitted from the material is therefore advantageous. In particular, an increase in the noise of the electronic signal indicates that the cut quality is diminishing.

The apparatus may be for controlling the quality of a laser weld process. The laser is focussed on to the material and forms a melt. The nature of the melt can vary and is classified as either being in a conduction mode or keyhole mode. For both welding processes instabilities can lead to porosity and varying penetration depth and ultimately weak weld joints. Being able to detect and adjust the welding parameters by monitoring of the optical radiation emitted from the material is therefore desirable. Other features of the invention such as optical integrity monitoring described above can also be provided, either with a test piece or without.

The apparatus may be for actively monitoring the quality of a melt produced in an additive manufacturing process (also known as 3D printing). For a laser based additive process, layers of powder are successively laid down and selectively melted using a laser to form complex 3D structures. This is known as powder bed fusion. It is key to the structural integrity of the process that the quality of the fusion is maintained throughout the structure. Owing to the complex structures, the thermal properties can alter during the build leading to variations in the fusion process. Monitoring and analysing of the optical emission from the melt is therefore desirable. Other features of the invention such as optical integrity monitoring described above can also be provided, either with a test piece or without.

In a further aspect the invention may comprise a method as claimed in claim 4.

The method may comprise providing an optical fibre and a laser processing head, and propagating the laser radiation from the laser through the optical fibre to the laser processing head.

The method may comprise providing a coupler, and coupling the optical radiation from the optical fibre to the detector.

In the method, the detector may be located in or on the laser processing head.

In the method, the electronic filter may comprise a peak detector.

In the method, the electronic filter may comprise a root mean square filter.

In the method, the electronic filter may comprise a bandpass filter.

In the method, the electronic filter may comprise a high pass filter.

In the method, the electronic filter may comprise an integrator.

In the method, the electronic filter may comprise a band stop filter configured to reject interference.

In the method, the discriminator may include a level detector for detecting a predetermined amplitude.

In the method, the discriminator may include a slope detector for detecting a predetermined slope.

In the method, the electronic filter and the discriminator may be configured in a digital electronic circuit.

In the method, the electronic filter may utilize spectral frequency analysis.

In the method, the electronic filter and the discriminator may be implemented with fuzzy logic.

In the method, at least one of the electronic filter and the discriminator may comprise a neural network.

In the method, the electronic filter may be an analogue electronic filter.

The method may comprise providing an optical filter. This can be advantageous in order to monitor and control other parameters associated with laser cutting, such as the temperature of the material while piercing and while cutting the material. The higher the temperature of the material, the more wavelengths in the optical spectrum that are emitted by the material. More than one optical filter can be provided each connected to a different detector. The filter detector combinations can be configured to analyse the optical spectral content at different wavelengths.

In the method, the characteristic feature may provide an indication that the material has been pierced. Alternatively or additionally, the characteristic feature may provide an indication as to when the optics requires cleaning or replacing in part. The characteristic feature that provides an indication as to when the optics requires cleaning or replacing in whole or in part may be different from the characteristic feature that provides an indication that the material has been pierced. Surprisingly the inventor has observed an increase in the amplitude of the electronic signal after the material has been pierced. This increase is associated with optics that require cleaning or replacing in whole or in part. The increase can be removed by replacing contaminated or defect cover slides that protect the lens from spatter from the work piece.

In the method, the material may comprise a test piece. This aspect of the invention is particularly useful in cutting machines. A test piece such as a 0.1mm to 2mm thick sheet of copper can be provided to one side of a cutting bed and the test piece can be pierced periodically for quality control purposes. Thus if the optics becomes dirty through spatter ejected from the material in a work piece such as steel or other materials, the state of the optics can be detected and the optics cleaned or cover slides replaced. Other features of the invention, such as pierce detection, can be utilized to control the piercing of the work piece.

As an example, copper has a thermal conductivity of approximately 400 W/m/K which causes heat absorbed by the material during piercing to be conducted away from the hole more rapidly than with material such as iron that has a thermal conductivity of approximately 83W/m/K. Consequently the hole formed in the piercing process has a similar diameter to the spot size of the laser radiation on the surface of the material. Contaminated or dirty optics can cause scatter or thermal lensing, which causes interaction of the laser radiation with the copper after piercing, and which can cause additional reflection or emission of the laser radiation from the surface. Thus monitoring the amplitude of the electronic signal or the rate of change in amplitude of the electronic signal after the material or a test piece has been pierced provides a useful and valuable indication that the optics needs cleaning or replacing in whole or in part.

In the method, the material may have a thermal conductivity greater than 150 W/m/K, preferably greater than 200 W/m/K and more preferably greater than 300 W/m/K. The material may comprise copper.

The method may be for controlling the laser piercing of the material. Alternative or additional control purposes include controlling the cutting speed of materials in order to optimize the quality of the cut. If the cutting speed is too fast, then this can lead to poor edge quality of the cut. If the cutting speed is too slow, then this can lead to excessive dross on the underside of the cut. The optimal cutting speed can also vary across a material, particularly at the edges of a sheet of metal owing to a change in the local heat sinking provided by the remainder of the sheet. Being able to control the cutting speed by monitoring and analyzing the optical radiation emitted from the material is therefore advantageous. In particular, an increase in the noise of the electronic signal indicates that the cut quality is diminishing.

The method may be for controlling the quality of a laser weld process. The laser is focussed on to the material and forms a melt. The nature of the melt can vary and is classified as either being in a conduction mode or keyhole mode. For both welding processes instabilities can lead to porosity and varying penetration depth and ultimately weak weld joints. Being able to detect and adjust the welding parameters by monitoring of the optical radiation emitted from the material is therefore desirable. The method may also include monitoring the optical integrity of the optics as described previously, either with a test piece, or without.

The method may be for actively monitoring the quality of a melt produced in an additive manufacturing process (also known as 3D printing). For a laser based additive process, layers of powder are successively laid down and selectively melted using a laser to form complex 3D structures. This is known as powder bed fusion. It is key to the structural integrity of the process that the quality of the fusion is maintained throughout the structure. Owing to the complex structures, the thermal properties can alter during the build leading to variations in the fusion process. Monitoring and analysing of the optical emission from the melt is therefore desirable. The method may also include monitoring the optical integrity of the optics as described previously, either with a test piece or without.

### Brief Description of the Drawings

Embodiments of the invention will now be described solely by way of example and with reference to the accompanying drawings in which:
Figure 1 shows apparatus according to the present invention for controlling laser processing of a material;
Figure 2 shows apparatus according to the present invention for controlling laser processing of a material, which apparatus includes a coupler;
Figure 3 shows a cross section of an optical fibre;
Figure 4 shows an electronic filter comprising a pre-filter, a non-linear function, and an integrator;
Figure 5 shows prior art in the form of a back reflected signal from a material as it is being pierced with laser radiation;
Figure 6 shows a signal from a detector as mild steel material is being pierced with laser radiation;
Figure 7 shows the signal of Figure 6 after the signal has been digitally band pass filtered and rectified;
Figure 8 shows the signal of Figure 7 after the signal has been integrated;
Figure 9 shows a signal from the detector as copper material is being pierced with laser radiation;
Figure 10 shows the signal of Figure 9 after the signal has been digitally band pass filtered, rectified, and integrated;
Figure 11 shows a signal from the detector as aluminium material is being pierced with laser radiation;
Figure 12 shows the frequency spectrum of the signal of Figure 11;
Figure 13 shows the signal of Figure 11 after the signal has been digitally band pass filtered, rectified, and integrated;
Figure 14 shows a laser comprising a plurality of lasers whose outputs are combined together;
Figure 15 shows a filter comprising a high pass filter, a rectifier, a first low pass filter, and a second low pass filter;
Figure 16 shows pierce detection of mild steel using the filter of Figure 15;
Figure 17 shows pierce detection of copper using the filter of Figure 15; and
Figure 18 shows pierce detection of aluminium using the filter of Figure 15.

### Detailed Description of Preferred Embodiments of the Invention

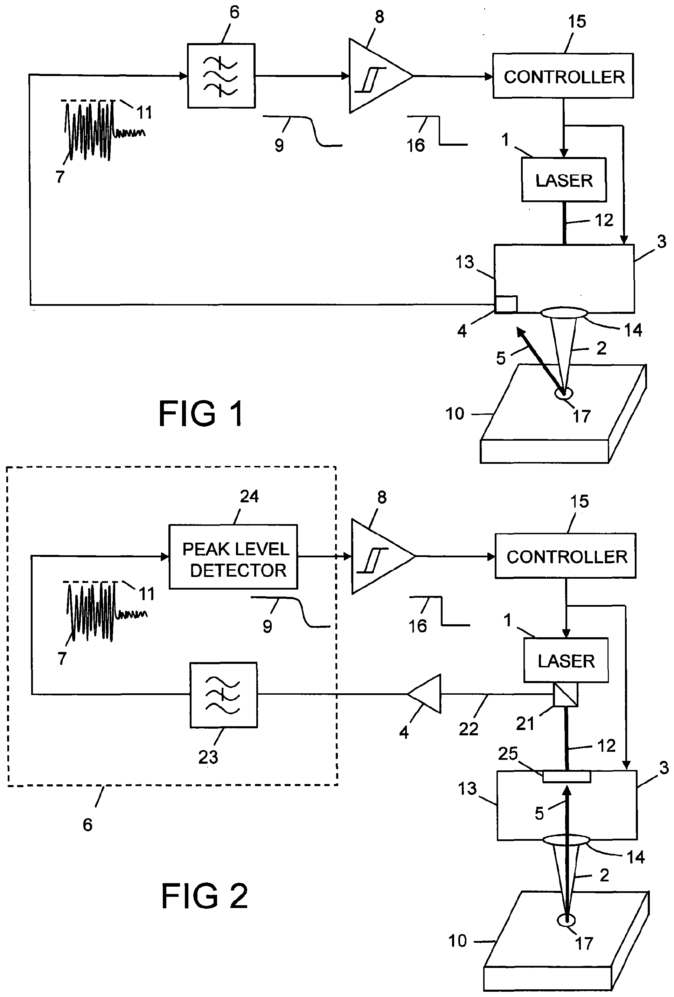

Figure 1 shows an apparatus for controlling laser processing of a material 10, which apparatus comprises a laser 1 for emitting laser radiation 2; means 3 for directing the laser radiation 2 onto the material 10; at least one detector 4 for detecting optical radiation 5 that is emitted by the material 10; an electronic filter 6 for filtering an electronic signal 7 emitted by the detector 4 in response to the detector 4 detecting the optical radiation 5; and a discriminator 8 for analysing the output 9 from the electronic filter 6. The apparatus is characterised in that the electronic filter 6 and the discriminator 8 are configured to determine at least one characteristic feature 11 of the electronic signal 7 that is indicative of the processing of the material 10 by the laser radiation 2.

The apparatus of the invention is advantageous in that significant time is often devoted to piercing material. Detecting and analyzing the optical radiation 5 that is emitted by the material 10 enables the apparatus to commence another piercing or a cutting operation more quickly after piercing the material 10. The optical radiation 5 emitted from the material 10 may be laser radiation that is reflected from the material 10 together with optical radiation that is emitted by the material 10 as a consequence of it being heated by the laser radiation 2. For example, metals often emit white light during laser processing, and analysing the optical spectral content of such light can be useful for ensuring that the correct laser processing temperature has been achieved. Such analysis can be at one or more of visible, infra-red and ultraviolet wavelengths.

The characteristic feature 11 can be a reduction in the noise of the electronic signal 7. Such reductions are observed to occur when the laser radiation 2 pierces the material 10. The characteristic feature 11 can be a rise in the noise of the electronic signal 7 that occurs with some materials when the laser radiation 2 starts to pierce the material 10, followed by a reduction in the noise amplitude or power of the electronic signal 7 that occurs when the laser radiation 2 has pierced the material 10. The characteristic feature 11 can be a reduction in the amplitude or power of at least one frequency component of the electronic signal 7 when the laser radiation pierces the material 10. Such frequency components are thought to be present because of the interaction of the laser radiation 2 with the material 10 during the piercing process. It is believed that molten metal may oscillate, reflecting the laser radiation 2 at angles that vary with a characteristic frequency.

The laser 1 can be a fibre laser, a disk laser, or a rod laser. Other types of laser may also be used.

The means 3 for directing the laser radiation 2 onto the material 10 includes an optical fibre 12 and a laser processing head 13. The optical fibre 12 is configured to propagate the laser radiation 2 from the laser 1 to the laser processing head 13. Optics 14 focuses the laser radiation 2 onto the material 10. The optics 14 can be or can comprise a single or a multi-element lens. The optics 14 can include a plurality of lenses, including collimation and beam expanding optics. The optics 14 would preferably include a cover slide (not shown) to protect the lens from spatter from the work piece. The laser radiation 2 may be used to cut a hole 17 in the material 10. Use of the optical fibre 12 enables the laser 1 to be located tens or hundreds of metres from the material 10 being processed. This can reduce constraints on factory layouts, for example in the provisioning of services such as cooling and electrical power for the laser 1.

A controller 15 receives a signal 16 from the discriminator 8. The controller 15 is used to control the laser 1 and the processing head 13.

The detector 4 can be on or in the processing head 13, as shown with reference to Figure 1. Alternatively, the apparatus can include a coupler 21 as shown in Figure 2. The optical radiation 5 is coupled into the optical fibre 12, and routed back towards the coupler 21, which directs the optical radiation 5 to the detector 4. An optical fibre 22 can transmit the optical radiation 5 from the coupler 21 to the detector 4. The coupler 21 separates the laser radiation 2 from the optical radiation 5. Guiding the optical radiation 5 from the material 10 along the optical fibre 12 towards the laser 1, and coupling the optical radiation 5 from the optical fibre 12 to the detector 4 helps to prevent damage to the laser 1 caused by the backward travelling optical radiation 5. In addition, it enables the detector 4, the electronic filter 6, and the discriminator 8 to be located within or near to the laser 1. This has the advantage for the end user that no equipment for controlling laser processing such as laser piercing is needed around the machining area, saving on cost and complexity. This is particularly advantageous for machining installations where it is difficult or impractical to include sensors at the material 10 for detecting laser piercing.

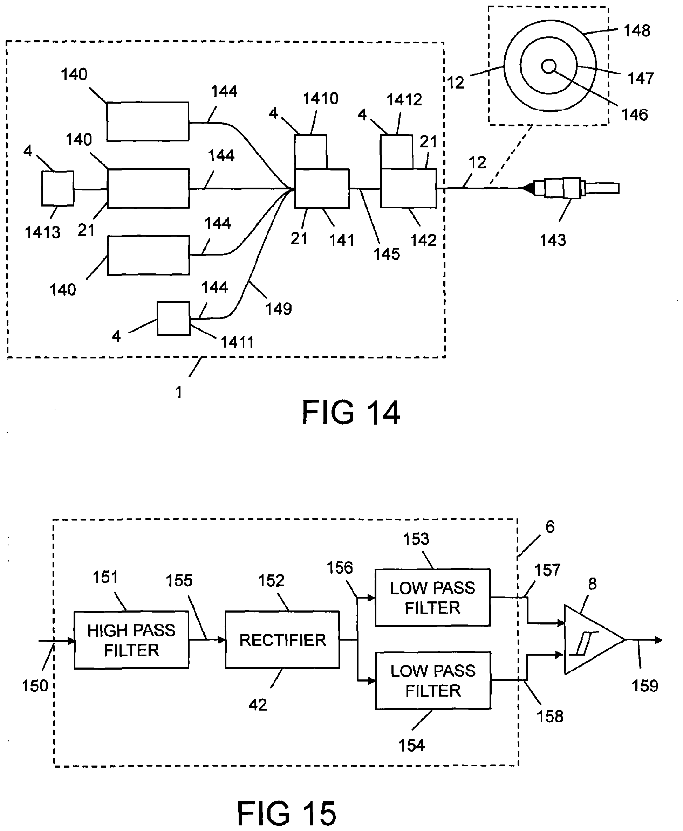

Figure 14 shows a variety of alternative couplers 21, each directing the optical radiation 5 to a different one of the detectors 4.

The laser 1 can comprise a plurality of lasers 140 which are combined together with a laser signal combiner 141 and coupled into the optical fibre 12. The optical fibre 12 can be terminated with an optical connector 143. The laser signal combiner 141 is typically a fused optical fibre component that combines a plurality of input fibres 144 into a single laser output fibre 145. The coupler 21 can be the laser signal combiner 141. The laser signal combiner 141 can be configured to act as a cladding mode stripper, directing the optical radiation 4 to a detector 1410 which may be placed adjacent to the laser signal combiner 141. Alternatively or additionally, an input fibre 149 can direct the optical radiation 5 from the laser signal combiner 141 to a detector 1411.

As shown in the insert of Figure 14, the optical fibre 12 comprises a core 146, a cladding 147, and a coating 148. The laser radiation 2 propagates along the core 146 of the fibre. The optical radiation 5 typically propagates along both the core 146 and the cladding 147 of the optical fibre 12. The cladding 147 is typically significantly larger than the core 146 in fibres that are used for cutting applications, and consequently most of the optical radiation 5 typically propagates in the cladding 147, and can be removed by an optional cladding mode stripper 142 as shown in Figure 14.

The coupler 21 can be the cladding mode stripper 142, which can be configured to direct the backward travelling optical radiation 5 to a detector 1412. The detector 1412 can be placed adjacent to the cladding mode stripper 142. Preferably, the cladding mode stripper 142 and its configuration within the laser 1 is such that the cladding mode stripper 142 directs the backward travelling optical radiation 5 to the detector 1412 more effectively than guiding any forward going laser radiation 2 that is removed by the cladding mode stripper 142 to the detector 1412. By "backward travelling" it is meant in a direction that is opposite to the forward going laser radiation 2, which laser radiation 2 is directed from the laser 1 to the material 10 as shown with reference to Figures 1 and 2.

The coupler 21 can be the laser 140 or in the case of a single laser, the laser 1 of Figures 1 and 2. The optical radiation 5 can comprise light at different wavelengths from the wavelength of the laser radiation 2 emitted by the laser 1. At least a portion of the optical radiation 5 can pass through the laser 140 to a detector 1413.

The coupler 21 can comprise a beam splitter, a dichroic mirror, an optical fibre coupler, a pump and signal beam combiner, or a laser signal combiner. Other forms of coupler 21 are also possible.

The coupler 21 shown in Figures 2 and 14 can be in the laser 1, or external to the laser 1.

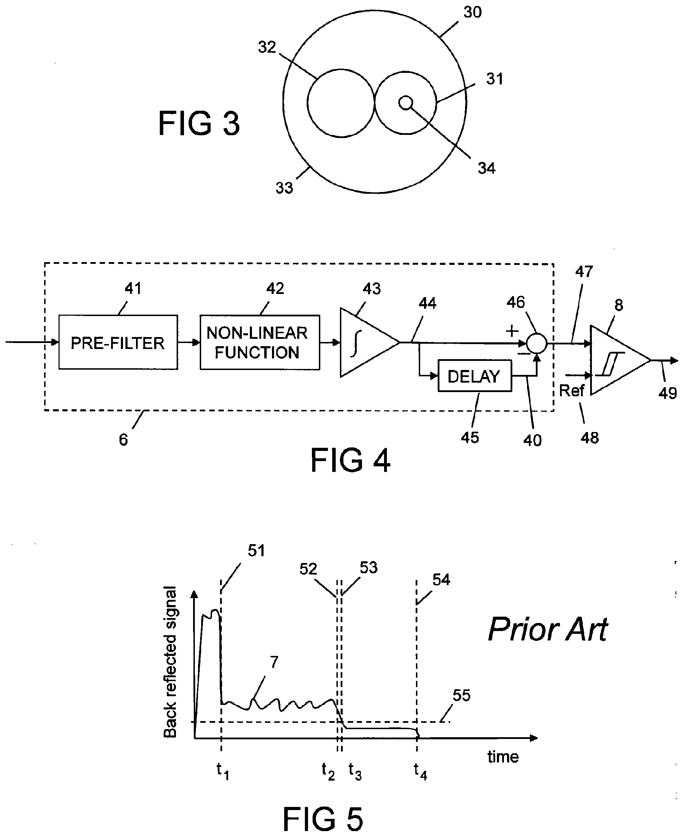

The coupler 21 can be formed from a composite optical fibre 30 comprising a first fibre 31 and a second fibre 32 as shown with reference to Figure 3. The first fibre 31 and the second fibre 32 are in optical contact with each other and are surrounded by a common coating material 33. The first fibre 31 preferably comprises a core 34 for guiding the laser radiation 2. The refractive index of the coating 33 is preferably lower than a refractive index of both the first and the second fibres 31, 32 in order that the optical radiation 5 can be guided along the second fibre 32. The second fibre 32 can be separated from the first fibre 31 by removing a portion of the coating 33, and the second fibre 32 can be directed to the detector 4. The first fibre 31 can be the optical fibre 12 in Figures 1 and 2.

The apparatus shown in Figure 2 can comprise at least one optical filter 25. The optical filter 25 is useful for transmitting certain optical wavelengths in the optical radiation 5 that are indicative of certain processing conditions, such as temperature. The optical filter 25 is shown located between the material 10 and the coupler 21. Alternatively or additionally the optical filter 25 can be located between the coupler 21 and the detector 4. The apparatus may comprise more than one optical filter 25 and detector 4, each filter detector combination configured to analyse the optical spectral content at different wavelengths. The apparatus of Figure 1 may also comprise at least one optical filter 25.

The electronic filter 6 shown in Figure 2 comprises a band stop filter 23 and a peak level detector 24. The band stop filter 23 is useful for removing interference signals that are sometimes present in large factory settings.

The peak level detector 24 removes high frequency content from the signal 7 and emits a signal 9 that is indicative of the peak amplitude 11 of the signal 7 over a time constant (not shown) selected to be short enough to reduce latency, and long enough to reduce false triggering of the discriminator 8. The peak level detector 24 can comprise a rectifier. The reduction in the amplitude (peak value) 11 of the signal 7 is indicative of the laser beam 2 piercing through the material 10. The apparatus of Figure 1 can also include one or more of the band stop filter 23 and the peak level detector 24.

The electronic filter 6 shown in Figures 1 and 2 can comprise a pre-filter 41 shown with reference to Figure 4. The pre-filter 41 is configured to improve the signal to noise ratio of the discriminator process. The pre-filter 41 can comprise a bandpass filter. A bandpass filter is advantageous for improving signal to noise ratio if the characteristic feature 11 in the electronic signal 7 occurs at a characteristic frequency. The centre frequency of the bandpass filter would be set at the characteristic frequency. A bandpass filter is also advantageous if the characteristic feature 11 is noise. The pre-filter 41 can comprise a high pass filter. A high pass filter is useful for removing the direct current value from the detector signal 7. A high pass filter can be used if the characteristic feature 11 is noise amplitude or noise power. If a particular frequency band is subject to electrical noise from interference from machinery, then the pre-filter 41 can be configured to reject such interference by, for example, selecting the centre frequency of a bandpass filter such that the filter rejects the interference. If the laser 1 is operated as a pulsed laser, then the centre frequency of the bandpass filter can be selected to be either higher or lower than the pulse repetition frequency of the pulsed laser in order to reject "noise" at the pulse repetition frequency arising from, for example, unwanted reflections within the laser apparatus. Other pre-filters, for example band stop filters, are also possible.

The electronic filter 6 of Figures 1 and 2 can comprise a non-linear function 42 shown with reference to Figure 4. The non-linear function 42 can comprise a demodulator, a peak level detector, a half wave rectifier, a full wave rectifier, or a root mean square filter. The non-linear function 42 can include a low pass filtering function such that the characteristic feature 11 is output as a baseband signal such as the signal 9 shown with reference to Figures 1 and 2. Other non-linear functions are also possible.

The discriminator 8 of Figures 1 and 2 can comprise a level detector or a comparator for detecting a predetermined amplitude of the signal output by the filter 6. The level detector or comparator preferably comprises hysteresis to improve the signal to noise ratio or reliability of the pierce detection process.

The electronic filter 6 of Figures 1 and 2 can comprise an integrator 43 as shown with reference to Figure 4. The integrator 43 is for integrating the output of the non-linear function 42. The discriminator of Figures 1 and 2 may include a slope detector (not shown) for detecting a predetermined slope of the signal output from the integrator 43. Alternatively or additionally, the output 44 of the integrator 43 can be delayed by a time delay 45 to provide a time delayed integrator output 40, which output 40 is subtracted from the output 44 of the integrator in subtracting means 46. The output 47 of the subtracting means 46 is compared to a reference value 48 in the discriminator 8 to produce the discriminator signal 49.

The electronic filter 6 and the discriminator 8 of Figures 1 and 2 may be configured in a digital electronic circuit. The digital electronic circuit may comprise a computer such as a microprocessor. The microprocessor may utilize spectral frequency analysis such as fast Fourier transforms to perform at least a portion of the filtering. The microprocessor may use fuzzy logic or a neural network in order to analyze the electronic signal 7 in order to provide the signal 16 that is indicative of the laser beam 2 piercing the material 10. Alternatively, or additionally, the electronic filter 6 may comprise an analogue electronic filter.

Figure 5 shows the electronic signal 7 emitted by the detector 4 when the optical radiation 5 is emitted from the material 10 in a typical pierce process. The process commences when the laser radiation 2 first interacts with the material 10, resulting in the laser radiation 2 being reflected. Depending on the material 10 and the wavelength of the laser radiation 2, the reflection can be 10% to 90% of the incident power, and can be higher for copper or gold. The amplitude of the signal 7 typically falls at a time 51, indicating that the laser radiation 2 has initiated a phase change in the material 10. The phase change can correspond to the material 10 melting, or to gases or particulates being emitted by the material 10. Once the phase change occurs, the material 10 absorbs a greater proportion of the incident laser radiation 2, allowing the hole 17 to be drilled. Typically, the optical radiation 5 that is coupled into the optical fibre 12 represents only about 0.05% of the incident laser radiation 2. The signal 7 can be very small and hard to detect. The hole 17 pierces through the material 10 at a time 52 and the optical radiation 5 reduces to near zero. As a consequence, the signal 7 reduces to near zero, with much of the signal being caused by other optical reflections or imperfections with the laser system. A level detector that monitors the signal 7 can be set with a threshold 55 corresponding to the time 53 when it is safe to conclude that the material 10 has been pierced. The laser 1 can then be turned off at a time 54, whereupon the signal 7 falls to zero.

As shown in Figure 5, it can be difficult to detect reliably the time 52 at which the material 10 has been pierced. This problem is exacerbated if there is interference caused by electrical machines, electrical power line interference, or other forms of electromagnetic interference. Other problems include the power stability of the laser radiation 2 that is emitted by the laser, variations in the power of the laser radiation 2 used in different processes and materials, and drifts in the electronic threshold 55 for example caused by temperature. Additionally some materials such as copper can be pierced but still have a residual reflectivity to some of the incident laser radiation 2 being incident on copper surrounding the hole 17, making pierce detection based on the amplitude of the detected optical radiation 5 complicated.

The apparatus and method of the present invention improve the reliability of the pierce detection by analysing at least one characteristic feature 11 of the electronic signal 7. The characteristic feature 11 can be the amplitude or power of the noise content of the electronic signal 7. The characteristic feature 11 can be the amplitude or power of a particular frequency component of the electronic signal 7. The method is preferably independent of the power level of the incident laser radiation 2. As will be described with reference to Figures 15 to 18, this can be achieved by deriving reference signals such as the reference 48 shown with reference to Figure 4 from the signals that are related to the power level of the incident laser radiation 2.

The apparatus shown in Figure 2 was used in the following Examples. The laser 1 was a 2kW ytterbium-doped fibre laser, model number JK2000FL manufactured by SPI Lasers UK Limited of Southampton, England, that was modified by placing the detector 4 in close proximity to an internal cladding mode stripper that removes the optical radiation 5 that propagates in the cladding 147 of the optical fibre 12 back towards the laser 1. The detector **4** was an Indium Gallium Arsenide photodiode which is sensitive to the infrared one micron laser radiation emitted by the fibre laser. The output of the detector 4 was amplified by an electronic amplifier.

### EXAMPLE 1

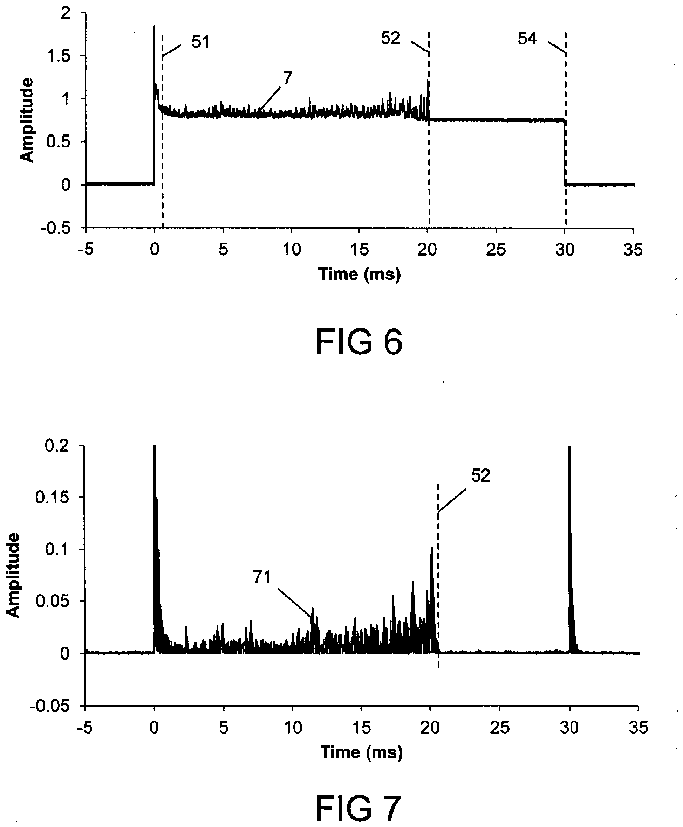

The material 10 was 3mm thick mild steel, and the laser radiation 2 was focussed to a diameter of 100µm onto the surface of the material 10. Figure 6 shows the signal 7 that was output by the detector 4 while piercing the material 10. The laser 1 took approximately 20ms to pierce the material 10. The signal 7 was noisy between times 51 and 52, indicating that the pierce process is inherently unstable. The effective reflectivity of the material 10 is oscillating, resulting in the signal 7 being heavily modulated over a wide frequency range (0-50kHz for a typical detector system). In addition, there is very little change in amplitude of the signal before and after the time 52 at which the material 10 was pierced by the laser radiation 2. It is believed that this is because the back reflected signal was much smaller than the signal caused by spurious reflections within the apparatus shown in Figure 2. As can be seen in Figure 6, it would have been difficult to set a threshold value 55 to provide a reliable indication of piercing.

The signal 7 was amplified, digitized with an analogue to digital converter sampling at 600 kHz, and filtered using the filter 6 shown in Figure 4. The pre-filter 41 was a second order bandpass filter having a centre frequency of 5kHz and a quality factor Q of 10. The non-linear function 42 was a digital rectifier characterized by an output equal to the modulus of the input to the digital rectifier. The integrator 43 was digital integration by which the output at a particular sample time was equal to the output at the preceding sample time plus the input to the integrator 43. The delay 45 corresponded to 100 samples. The reference 48 was set to provide a reliable indication of pierce detection of the material 10 by the laser radiation 2.

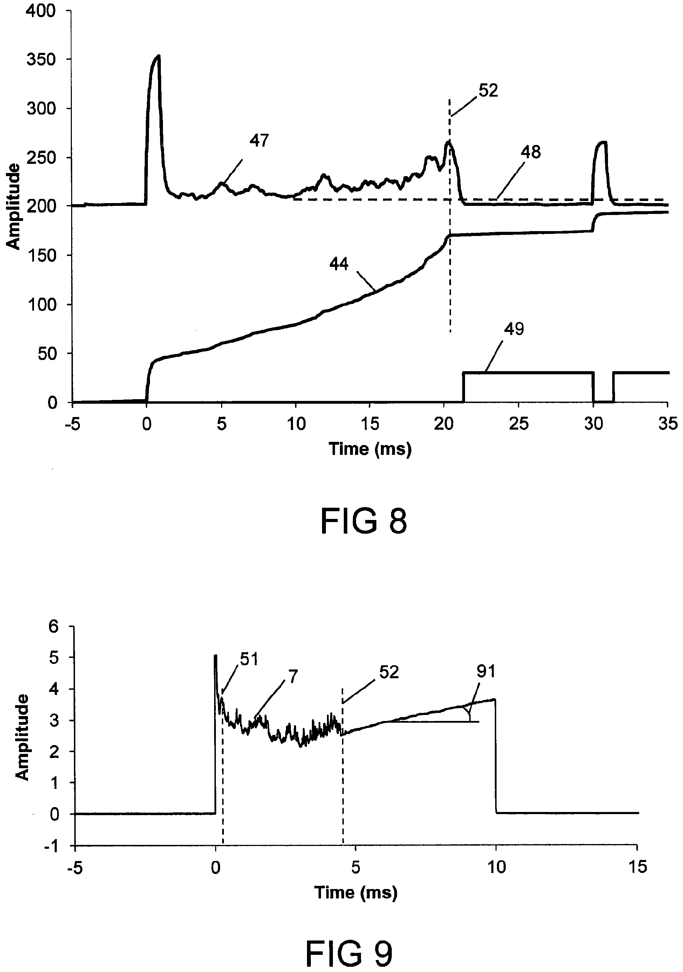

The output 71 of the digital rectifier is shown in Figure 7. The signal 71 reduces in amplitude to near zero after the time 52. The output 44 of the integrator 43 is shown in Figure 8. The slope of the output 44 reduces to near zero after the time 52. Figure 8 also shows the output 47 of the subtracting means 46 and the discriminator signal 49. The output 47 has been level shifted by 200 units for clarity. The discriminator signal 49 was obtained by comparing the output 47 of the subtracting means 46 to a reference value 48. When the output 47 fell below the value of the reference value 48, the discriminator signal 49 rises to provide a positive indication of the piercing of the material 10.

Alternatively, the discriminator 8 in Figure 2 can analyze the slope of the output 44 to determine the time 52, or can analyze the signal 71, for example by performing a rolling variance of the signal 71 shown with reference to Figure 7, and looking for the variance to reduce significantly in amplitude. Other non-linear functions and discrimination methods can also be used in isolation or in addition.

The signals 71 and 44 shown with reference to Figures 7 and 8 illustrate how the method of the invention can be used to detect piercing of the material 10 when the slope of the output 44 of the integrator 43 of the selected high frequency band falls to near zero. For this example 5kHz has been chosen as the centre frequency of the band pass filter, but the algorithm works equally well with centre frequencies between 500Hz and 50kHz and a quality factor Q of 10. Other quality factors also work well. It should be noted that latency is reduced as the ratio of centre frequency to quality factor Q is increased. Reducing latency allows the discriminator decision within the discriminator to be made more rapidly.

It is preferable that the laser radiation 2 emitted by the laser 1 is stable. In this Example, the "noise" within the bandpass of the 5kHz filter without the presence of the optical radiation 5 being emitted by the material 10 was 0.25% peak to peak, whereas the "noise" in the presence of the optical radiation 5 was approximately 2.5% peak to peak. The centre frequency of the bandpass filter is preferably selected to increase the signal to noise ratio of the piercing detection process, and may vary from laser type to laser type. The optimum centre frequency can be found by experimentation. In this Example, the characteristic feature 11 was the amplitude or power of a particular frequency component of the electronic signal 7.

### EXAMPLE 2

Experiments were performed to investigate laser piercing of more reflective materials, including brass and copper.

The material 10 was 2mm thick copper, and the laser radiation 2 was focussed to a diameter of 100µm onto the surface of the material 10. Figure 9 shows the signal 7 that was output by the detector 4 while piercing the material 10. The laser 1 took approximately 4.5ms to pierce the material 10. The signal 7 is very noisy between times 51 and 52, indicating that the pierce process is inherently unstable. Interestingly, the signal 7 increases in amplitude after the time 52 which would make a purely amplitude discrimination process, such as described with reference to Figure 5, difficult.

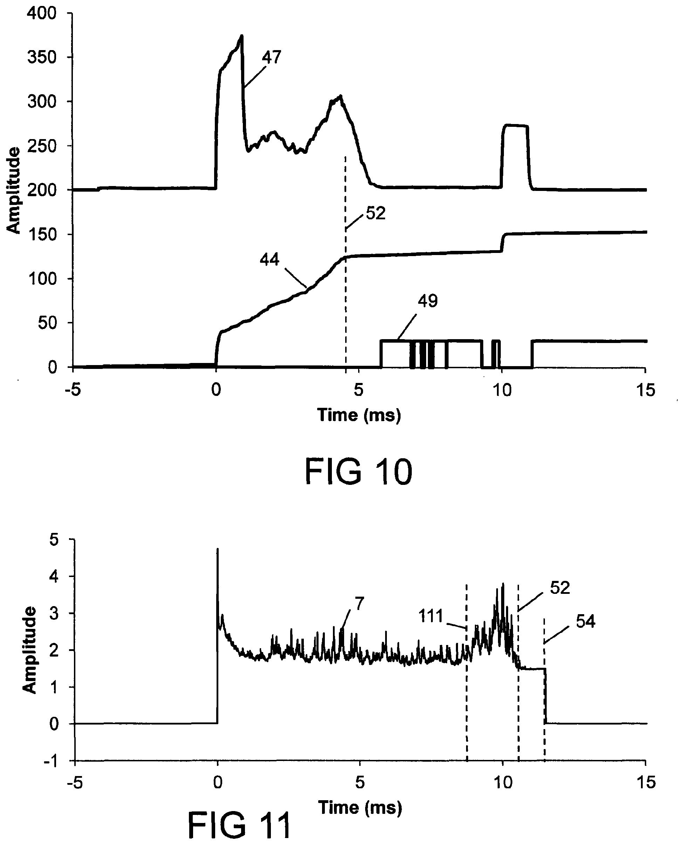

The signal 7 was passed through the same filter 6 as used in Example 1. The output 44 of the integrator 43 is shown in Figure 10, together with the output 47 of the subtracting means 46 and the discriminator signal 49. As before, the output 47 has been level shifted by 200 units for clarity. The discriminator signal 49 provides a positive indication of the piercing of the material 10. In this Example, there were two characteristic features 11:
(i) the amplitude or power of a particular frequency component of the electronic signal 7; and
(ii) the increase in the amplitude of the signal 7 shown by the rate of change 91 of the signal 7.

The increase of the amplitude of the signal 7 was indicative that the optics 14 needs cleaning or replacing in whole or in part. In the experiment, replacing the cover slide that formed part of the optics 14 with a new and clean cover slide eliminated the increase in the amplitude of the signal 7 after the time 52.

Without wishing to limit the scope of the invention, it is believed that the increase occurred because (i) the optics 14 was contaminated, and (ii) the material 10 was copper. Copper has a higher thermal conductivity than the steel used in Example 1. Consequently heat is conducted away from the melt zone caused by the interaction of the laser radiation 2 with the copper more rapidly than it is with steel. The resulting hole 17 in copper therefore has a similar diameter to the spot size of the laser radiation 2 on the material 10. Contaminants or damage to the optics 14 can cause scattering of the laser radiation 2, or can result in thermal lensing within the optics 14. Either may result in drift in the position of the laser radiation 2 on the surface of the material 10, resulting in an increasing amount of interaction of the laser radiation 2 with the material 10. This interaction can cause additional melt zones on the material and the reflection from these can increase with time with a rate of change 91 that increases with the magnitude of the imperfections in the optics 14.

Steel has a lower thermal conductivity than copper, and the hole 17 can have a diameter that is twice or more then the diameter of the laser radiation 2 on surface of the material 10. Once the material 10 is pierced, there will therefore be less interaction of the laser radiation 2 with steel than there is with copper.

The ability to detect damaged or contaminated optics, that is optical integrity monitoring, provides important advantages in the laser processing of materials. The material 10 can have a thermal conductivity greater than 150 W/m/K, preferably greater than 200 W/m/K and more preferably greater than 300 W/m/K. The material 10 can be a test piece that can be pierced periodically by the laser radiation 2 in order to validate the integrity of the optics 14. Including a test piece such as copper is particularly useful when laser processing material such as steel that has a lower thermal conductivity. The electrical signal 7 can be stored and analyzed each time it is pierced for quality control purposes including monitoring the cleanliness and integrity of the optics 14. If the rate of change 91 of the electrical signal 7 is greater than a predetermined value, then an alarm can be generated to alert the user that the optics 14 needs cleaning or replacing in whole or in part. Although this optical integrity monitoring feature has been described with reference to Example 2, it can be used in any of the other embodiments and examples of the invention described herein.

### EXAMPLE 3

The material 10 was 3mm thick aluminium, and the laser radiation 2 was focussed to a diameter of 100µm onto the surface of the material 10. Figure 11 shows the signal 7 that was output by the detector 4 while piercing the material 10. The laser 1 took approximately 10.5ms to pierce the material 10. The signal 7 becomes increasingly noisy as the hole 17 is pierced through the material 10, and is especially noisy between a time 111 and the time 52 that the piercing was achieved.

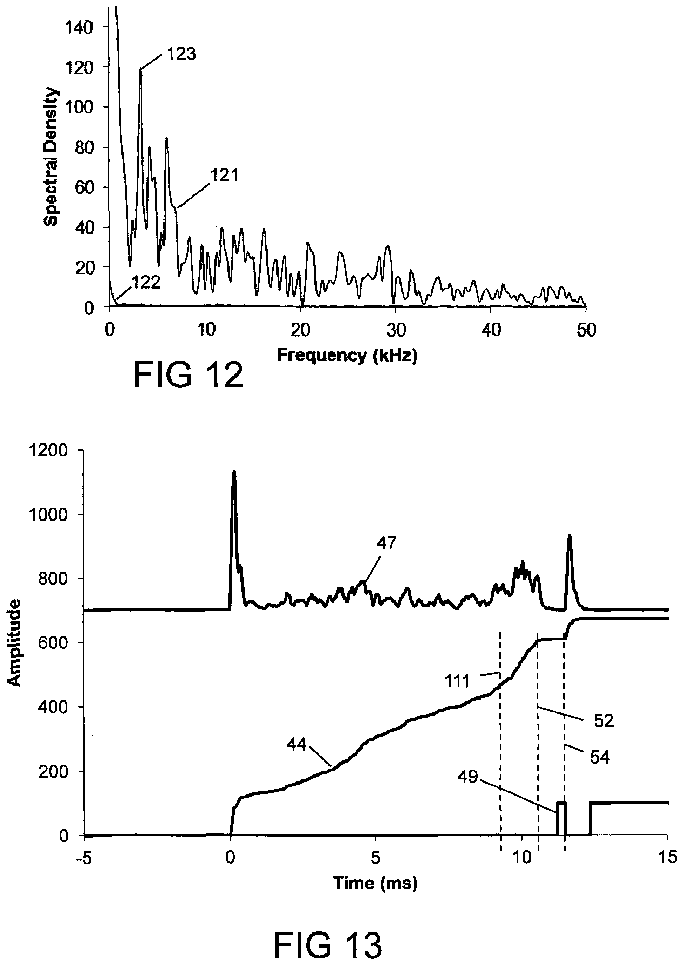

Figure 12 shows the frequency spectrum 121 of the signal 7 shown in Figure 11 between times of 7 to 10ms. The frequency spectrum 121 was obtained using fast Fourier transforms. Also shown is the frequency spectrum 122 obtained without the optical radiation 5 being emitted by the work piece. The frequency spectrum 121 is larger than the frequency spectrum 122, illustrating the amount of noise or information that is contained in the signal 7 during the piercing process.

Although the frequency spectrum 121 is relatively broad, it contains certain frequency components that are stronger than others. One of the most prominent frequency components 123 is at 3kHz. The digital filter used in Examples 1 and 2 was therefore modified such that the central frequency of the digital band pass filter was equal to 3kHz. The quality factor Q was reduced from 10 to 5.

The output 44 of the integrator 43 is shown in Figure 13. The slope of the output 44 reduces at the time 52 at which the piercing of the material 10 was complete. There is then another increase in slope at time 54 when the laser 1 was turned off. This increase in slope occurs because the step change in the signal 7 at time 54 shown with reference to Figure 11 has a large frequency content, including at the centre frequency of the digital band pass filter. Also shown is the output 47 of the subtracting means 46 and the discriminator signal 49. As before, the output 47 has been level shifted for clarity. The discriminator signal 49 provides a positive indication of the piercing of the material 10.

Referring again to Figure 13, there is also shown an increase in the slope of the output 44 at time 111, corresponding to the increase in noise of the signal 7 in Figure 11 and output 47 in Figure 13. This increase in noise was evidenced in other experiments with aluminium, and using other sensors, was found to correspond to the time that an incomplete pierce of the aluminium was achieved. It is believed that the increase in noise corresponds to a change in dynamics of the melt pool within the hole 17. In this Example, the characteristic feature 11 was an increase of the amplitude or power of a particular frequency component of the electronic signal 7, followed by a decrease of the amplitude or power at that particular frequency.

This Example illustrates an optional feature of the invention, namely that additional information can be gathered about the dynamics of the melt within the hole 17 as the material 10 is being pierced by analysing specific frequency bands of the signal 7.

Figure 15 shows an implementation of the filter 6 shown in Figures 1 and 2. The filter 6 comprises a high pass filter 151, and rectifier 152, a first low pass filter 153, and a second low pass filter 154. The high pass filter 151 was configured to have a bandwidth of 3kHz. The rectifier 152 was configured to invert negative going signals and pass positive going signals. The first low pass filter 153 was configured to have a bandwidth of 1kHz and a gain of unity. The second low pass filter 154 was configured to have a bandwidth of 100Hz and a gain of 1/3. The discriminator 8 was configured to output a positive going signal when the signal 158 was larger than the signal 157.

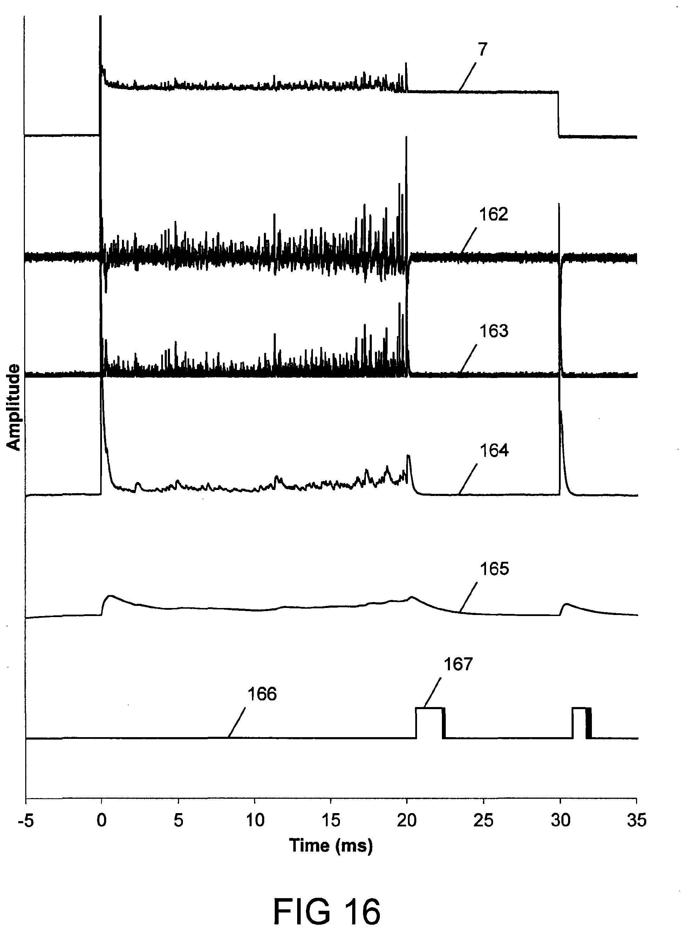

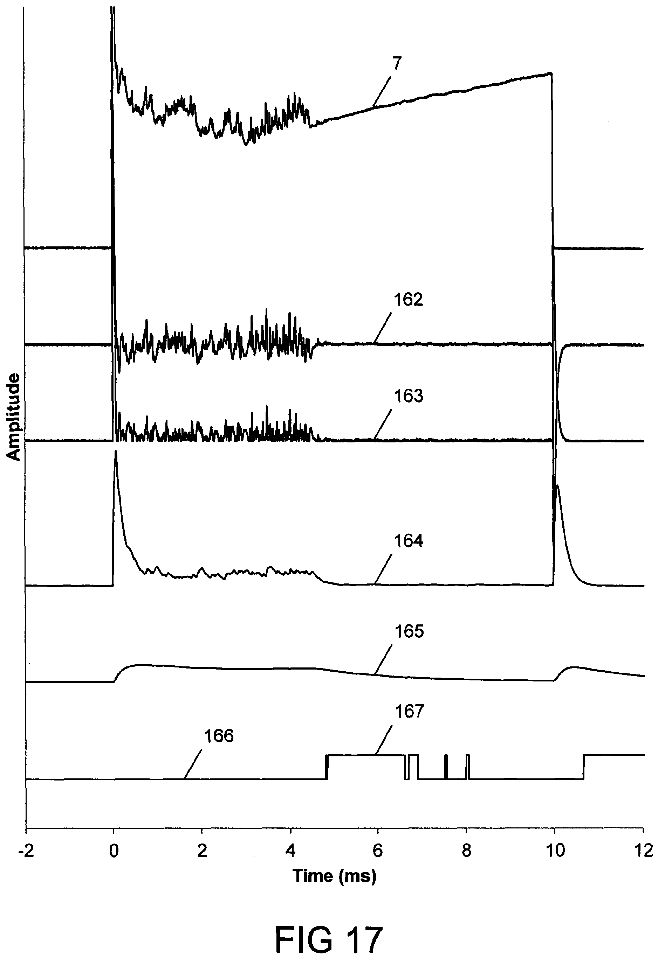

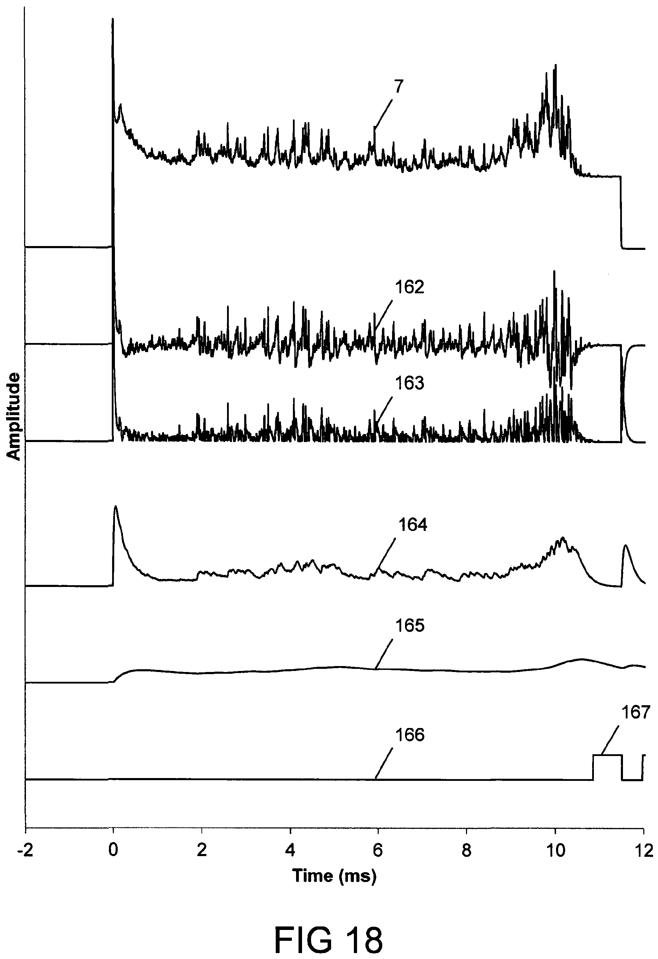

The signals 7 shown with reference to Figures 6, 9 and 11 were analysed using the filter 6 and discriminator 8 shown in Figure 15. The results are shown in Figures 16, 17 and 18 respectively. Referring to Figure 16, the signal 7 was at the input 150 to the high pass filter 151. The waveform 162 was at the output 155 of the high pass filter 151. The waveform 163 was at the output 156 of the rectifier 152. The waveform 164 was at the output 157 of the first low pass filter 153. The waveform 165 was at the output 158 of the second low pass filter 154. The waveform 166 was at the output 159 of the discriminator 8. The same numbering convention was used for Figures 17 and 18. In each of Figures 16 to 18, the waveform 166 provides a robust measure of laser piercing, which piercing is indicated by the first positive going signal 167. The characteristic feature 11 in the analysis shown in Figures 16 to 18 is the noise amplitude or power of the electronic signal 7.

The bandwidths, gains, and configuration of the filters shown in Figure 15 can be adapted and modified, and different types of analogue or digital filters can be used. The second low pass filter 154 can be replaced with a simple threshold value (voltage for analogue electronics, number for digital filtering), which can be selected by the user through experimentation or via a look up table. However using the second low pass filter 154 as described has advantages in that the waveform 165 scales with the waveform 164, and thus the pierce detection process is independent of the amplitude of the signal 7.

The invention described with reference to the Figures and the Examples can be used in a variety of ways, including:
(i) determining when the material 10 has been pierced, so that the laser 1 can either be turned off, or the controller 15 can send out the requisite control signals to commence the cutting process;
(ii) to provide a monitor of cutting quality, an increase in noise indicating the cut quality diminishing;
(iii) to provide a weld quality monitor, an increase in noise indicating weld quality diminishing; and
(iv) to provide an error signal within the laser 1 if noise increases in the signal 7 in the absence of the optical radiation 5 being emitted from the material 10.

Optical integrity monitoring, that is, the apparatus for the detection of, and the method for detecting, damaged or contaminated optics described above, can be used with any of the other control purposes. The characteristic feature that is indicative of damaged or contaminated optics can be the same or different from the characteristic feature that is used to control piercing, cutting, welding or additive manufacturing. A test piece can be provided for the optical integrity monitoring as was described with reference to Example 2.

## Claims

1. Apparatus for controlling laser processing of a material, which apparatus comprises:
• a laser for emitting laser radiation;
• means for directing the laser radiation onto the material;
• at least one detector for detecting optical radiation that is emitted by the material;
• an electronic filter for filtering an electronic signal emitted by the detector in response to the detector detecting the optical radiation; and
• a discriminator for analysing the output from the electronic filter;
and the apparatus being **characterised in that**
• the electronic filter and the discriminator are configured to determine at least one characteristic feature of the electronic signal that is indicative of the processing of the material by the laser radiation; and
• the characteristic feature comprises at least one of noise of the electronic signal thereby to provide an indication of when the material has been pierced, and an increasing amplitude of the electronic signal after the material has been pierced thereby to provide an indication of when optics in the apparatus needs cleaning or replacing in whole or in part.

2. Apparatus according to claim 1 wherein the means for directing the laser radiation onto the material includes an optical fibre and a laser processing head, and wherein the optical fibre is configured to propagate the laser radiation from the laser to the laser processing head, and wherein the apparatus includes a coupler configured to couple the optical radiation emitted by the material from the optical fibre to the detector.

3. Apparatus according to claim 1 or claim 2 wherein the characteristic feature that provides an indication as to when the optics requires cleaning or replacing in whole or in part occurs after the time at which the material has been pierced.

4. A method for controlling laser processing of a material, which method comprises:
• providing a laser for emitting laser radiation;
• directing the laser radiation onto the material;
• detecting optical radiation that is emitted by the material with a detector;
• filtering an electronic signal emitted by the detector in response to the optical radiation with an electronic filter; and
• analysing the output from the electronic filter with a discriminator;
and the method being **characterised in that**
• the electronic filter and the discriminator are configured to determine at least one characteristic feature of the electronic signal that is indicative of the piercing of the material by the laser radiation; and
• the characteristic feature comprises at least one of noise of the electronic signal thereby to provide an indication of when the material has been pierced, and an increasing amplitude of the electronic signal after the material has been pierced thereby to provide an indication of when optics in the apparatus needs cleaning or replacing in whole or in part.

5. A method according to claim 4 comprising providing an optical fibre, a laser processing head, and a coupler, propagating the laser radiation from the laser through the optical fibre to the laser processing head, and coupling the optical radiation emitted by the material from the optical fibre to the detector.

6. A method according to claim 4 or claim 5 wherein the characteristic feature that provides an indication as to when the optics requires cleaning or replacing in whole or in part occurs after the time at which the material has been pierced.

7. A method according to any one of claims 4 to 6 wherein the increase in the amplitude of the signal is **characterized by** a rate of change of the electrical signal, and the method includes the step of generating an alarm if the rate of change of the electrical signal is greater than a predetermined value.

8. A method according to any one of claims 4 to 7 wherein the material comprises a test piece.

9. A method according to any one of claims 4 to 8 wherein the material has a thermal conductivity greater than 150W/m/K.

## Patentansprüche

1. Einrichtung zum Steuern der Laserbearbeitung eines Materials, wobei die Einrichtung umfasst:
• einen Laser zum Emittieren von Laserstrahlung;
• ein Mittel zum Richten der Laserstrahlung auf das Material;
• wenigstens einen Detektor zum Erkennen von optischer Strahlung, die von dem Material emittiert wird;
• ein elektronisches Filter zum Filtern eines elektronischen Signals, das von dem Detektor als Reaktion darauf, dass der Detektor die optische Strahlung erkennt, emittiert wird; und
• einen Diskriminator zum Analysieren der Ausgabe von dem elektronischen Filter;
und die Einrichtung **dadurch gekennzeichnet ist, dass**
• das elektronische Filter und der Diskriminator dazu konfiguriert sind, wenigstens ein kennzeichnendes Merkmal des elektronischen Signals zu bestimmen, das die Bearbeitung des Materials durch die Laserstrahlung anzeigt; und
• das kennzeichnende Merkmal wenigstens eines von Rauschen des elektronischen Signals, um dadurch eine Anzeige dafür bereitzustellen, wann das Material durchdrungen wurde, und einer zunehmenden Amplitude des elektronischen Signals umfasst, nachdem das Material durchdrungen wurde, um dadurch eine Anzeige dafür bereitzustellen, wann Optiken in der Einrichtung ganz oder teilweise gereinigt oder ausgetauscht werden müssen.

2. Einrichtung nach Anspruch 1, wobei das Mittel zum Richten der Laserstrahlung auf das Material eine optische Faser und einen Laserbearbeitungskopf beinhaltet, wobei die optische Faser dazu konfiguriert ist, die Laserstrahlung von dem Laser zu dem Laserbearbeitungskopf zu leiten, und wobei die Einrichtung einen Koppler beinhaltet, der dazu konfiguriert ist, die optische Strahlung, die von dem Material emittiert wird, von der optischen Faser an den Detektor zu koppeln.

3. Einrichtung nach Anspruch 1 oder 2, wobei das kennzeichnende Merkmal, das eine Anzeige dafür bereitstellt, wann die Optik ganz oder teilweise gereinigt oder ausgetauscht werden muss, nach dem Zeitpunkt, zu dem das Material durchdrungen wurde, auftritt.

4. Verfahren zum Steuern der Laserbearbeitung eines Materials, wobei das Verfahren umfasst:
• Bereitstellen eines Lasers zum Emittieren von Laserstrahlung;
• Richten der Laserstrahlung auf das Material;
• Erkennen von optischer Strahlung, die von dem Material emittiert wird, mit einem Detektor;
• Filtern eines elektronischen Signals, das von dem Detektor als Reaktion auf die optische Strahlung emittiert wird, mit einem elektronischen Filter; und
• Analysieren der Ausgabe von dem elektronischen Filter mit einem Diskriminator;
und das Verfahren **dadurch gekennzeichnet ist, dass**
• das elektronische Filter und der Diskriminator dazu konfiguriert sind, wenigstens ein kennzeichnendes Merkmal des elektronischen Signals zu bestimmen, das das Durchdringen des Materials durch die Laserstrahlung anzeigt; und
• das kennzeichnende Merkmal wenigstens eines von Rauschen des elektronischen Signals, um dadurch eine Anzeige dafür bereitzustellen, wann das Material durchdrungen wurde, und einer zunehmenden Amplitude des elektronischen Signals umfasst, nachdem das Material durchdrungen wurde, um dadurch eine Anzeige dafür bereitzustellen, wann Optiken in der Einrichtung ganz oder teilweise gereinigt oder ausgetauscht werden müssen.

5. Verfahren nach Anspruch 4, umfassend das Bereitstellen einer optischen Faser, eines Laserbearbeitungskopfes und eines Kopplers, das Ausbreiten der Laserstrahlung von dem Laser durch die optische Faser zu dem Laserbearbeitungskopf, und das Koppeln der optischen Strahlung, die von dem Material emittiert wird, von der optischen Faser an den Detektor.

6. Verfahren nach Anspruch 4 oder 5, wobei das kennzeichnende Merkmal, das eine Anzeige dafür bereitstellt, wann die Optik ganz oder teilweise gereinigt oder ausgetauscht werden muss, nach dem Zeitpunkt, zu dem das Material durchdrungen wurde, auftritt.

7. Verfahren nach einem der Ansprüche 4 bis 6, wobei die Zunahme der Amplitude des Signals durch eine Änderungsrate des elektrischen Signals gekennzeichnet ist und das Verfahren den Schritt des Erzeugens eines Alarms beinhaltet, wenn die Änderungsrate des elektrischen Signals größer als ein vorbestimmter Wert ist.

8. Verfahren nach einem der Ansprüche 4 bis 7, wobei das Material ein Teststück umfasst.

9. Verfahren nach einem der Ansprüche 4 bis 8, wobei das Material eine Wärmeleitfähigkeit von mehr als 150 W/m/K aufweist.

## Revendications

1. Appareil de contrôle d'un traitement laser d'un matériau, ledit appareil comprenant :
• un laser pour l'émission d'un rayonnement laser ;
• un dispositif pour diriger le rayonnement sur le matériau ;
• au moins un détecteur pour détecter le rayonnement optique émis par le matériau ;
• un filtre électronique pour filtrer un signal électronique émis par le détecteur en réponse au détecteur détectant le rayonnement optique ; et
• un discriminateur pour analyser la sortie du filtre électronique ;
et l'appareil étant **caractérisé en ce que**
• le filtre électronique et le discriminateur sont configurés pour déterminer au moins une particularité du signal électronique, qui est indicative du traitement du matériau par le rayonnement laser ; et
• la particularité comprenant au moins un du bruit du signal électronique, en fournissant ainsi une indication de quand le matériau a été percé, et une amplitude croissante du signal électronique après le percement du matériau, pour fournir ainsi une indication de quand le nettoyage ou la substitution intégrale ou partielle de l'optique dans l'appareil devient nécessaire.

2. Appareil selon la revendication 1, le dispositif pour diriger le rayonnement laser sur le matériau comprenant une fibre optique et une tête de traitement laser, et la fibre optique étant configurée pour propager le rayonnement laser du laser à la tête de traitement laser, et l'appareil comprenant un coupleur configuré pour coupler le rayonnement optique émis par le matériau de la fibre optique au détecteur.

3. Appareil selon la revendication 1 ou la revendication 2, la particularité fournissant une indication de quand le nettoyage ou la substitution intégrale ou partielle de l'optique devient nécessaire survenant après le moment où le matériau a été percé.

4. Procédé de contrôle d'un traitement laser d'un matériau, le procédé comprenant :
• la mise en place d'un laser pour l'émission d'un rayonnement laser ;
• la direction du rayonnement laser sur le matériau ;
• la détection du rayonnement optique émis par le matériau à l'aide d'un détecteur ;
• le filtrage d'un signal électronique émis par le détecteur en réponse au rayonnement optique à l'aide d'un filtre électronique ; et
• l'analyse de la sortie du filtre électronique à l'aide d'un discriminateur ;
et le procédé étant **caractérisé en ce que**
• le filtre électronique et le discriminateur sont configurés pour déterminer au moins une particularité du signal électronique qui est indicative du percement du matériau par le rayonnement laser ; et
• la particularité comprend au moins un du bruit du signal électronique pour fournir ainsi une indication de quand le matériau a été percé, et d'une amplitude croissante du signal électronique après le percement du matériau, pour fournir ainsi une indication de quand le nettoyage ou la substitution intégrale ou partielle de l'optique dans l'appareil devient nécessaire.

5. Procédé selon la revendication 4, comprenant la mise en place d'une fibre optique, d'une tête de traitement laser, et d'un coupleur, la propagation du rayonnement laser du laser à travers la fibre optique à la tête de traitement laser, et le couplage du rayonnement optique émis par le matériau de la fibre optique au détecteur.

6. Procédé selon la revendication 4 ou la revendication 5, la particularité fournissant une indication de quand le nettoyage ou la substitution intégrale ou partielle de l'optique devient nécessaire survenant après le moment où le matériau a été percé.

7. Procédé selon une quelconque des revendications 4 à 6, l'augmentation de l'amplitude du signal étant **caractérisée par** une vitesse de variation du signal électrique, et le procédé comprenant l'étape de déclenchement d'une alarme si la vitesse de variation du signal électrique est supérieure une valeur prédéterminée.

8. Procédé selon une quelconque des revendications 4 à 7, le procédé comprenant une éprouvette.

9. Procédé selon une quelconque des revendications 4 à 8, la conductivité thermique du matériau étant supérieure à 150W/m/K.
